(19)

**Europäisches Patentamt**
**European Patent Office**
**Office européen des brevets**

(11) **EP 3 997 587 B1**

(12) **EUROPEAN PATENT SPECIFICATION**

(45) Date of publication and mention
of the grant of the patent:
**22.10.2025 Bulletin 2025/43**

(21) Application number: **20733230.5**

(22) Date of filing: **10.06.2020**

(51) International Patent Classification (IPC):
**G06F 16/27** *(2019.01)* **G06F 16/29** *(2019.01)*

(52) Cooperative Patent Classification (CPC):
**G06F 16/273; G06F 16/29**

(86) International application number:
**PCT/EP2020/066105**

(87) International publication number:
**WO 2021/004721 (14.01.2021 Gazette 2021/02)**

(54) **SYNCHRONIZATION OF SPATIAL ENTITY ATTRIBUTES IN DIFFERENT DATABASES**

SYNCHRONISIERUNG VON RÄUMLICHEN ENTITÄTSATTRIBUTEN IN VERSCHIEDENEN
DATENBANKEN

SYNCHRONISATION D'ATTRIBUTS D'ENTITÉ SPATIALE DANS DIFFÉRENTES BASES DE
DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2019 SE 1950861**

(43) Date of publication of application:
**18.05.2022 Bulletin 2022/20**

(73) Proprietor: **T2 Data AB**
**164 40 Kista (SE)**

(72) Inventor: **EKBOM, Mikael**
**184 92 Åkersberga (SE)**

(74) Representative: **Rouse AB**
**P.O.Box 7086**
**103 87 Stockholm (SE)**

(56) References cited:
**US-A1- 2018 341 691 US-B1- 7 912 633**

• **E POORAZIZI ET AL: "Developing a Mobile GIS
for Field Geospatial Data Acquisition",
JOURNAL OF APPLIED SCIENCES (ASIAN
NETWORK FOR SCIENTIFIC INFORMATION),
December 2008 (2008-12-01), pages 3279 - 3283,
XP055721795, Retrieved from the Internet
<URL:https://pdfs.semanticscholar.org/cdc5/
7ed97fe00e12d7b83abc280e776030034e40.pdf>
DOI: 10.3923/jas.2008.3279.3283**
• **GUO DANDAN ET AL: "An Effective Tile Caching
Mechanism of UAV Remote Sensing Map Based
on Hilbert Coding Index", 2019 IEEE 11TH
INTERNATIONAL CONFERENCE ON
COMMUNICATION SOFTWARE AND NETWORKS
(ICCSN), IEEE, 12 June 2019 (2019-06-12), pages
535 - 541, XP033662015, DOI: 10.1109/
ICCSN.2019.8905357**

**Description**

TECHNICAL FIELD

The present disclosure relates to synchronization of spatial entity attributes in different databases that are communicatively coupled to form a distributed and nonhierarchical database cluster.

BACKGROUND

It is in many different situations useful to be able to store attributes that relate to different locations in a space. Meteorological data can e.g. be collected for different spatial locations in the atmosphere and used for forecasting the weather. The meteorological data can be stored and updated for each spatial location in the atmosphere. Another example is air traffic control, where the position of all aircraft in the controlled airspace needs to be continuously monitored. Document US7912633B1, published on 22-03-2011 with title "Mobile autonomous updating of GIS maps", discloses a method for updating GIS map, from mobile devices, to reflect differential data collection. Document US2018341691A1 published on 29-11-2018 with title "DATA SYNCHRONIZATION IN A DISTRIBUTED DATA STORAGE SYSTEM", discloses distributed database synchronisation system.

SUMMARY

In most situations where attributes that relate to different locations in a space are stored, the attributes for the different spatial locations can be stored in a database on a central server that is accessible to all parties to the system.

However, in some applications, it is useful to distribute the storage into several different databases. For example, if a cluster of drones co-operate to gather information such as e.g. land surveying information, it is useful if each of the drones can maintain a database about the attributes of the spatial locations surveyed by this drone, and the drones in the cluster can exchange such information between them. This helps ensuring that the drones in the cluster together cover all spatial locations, and avoids any of the drones in the cluster unnecessarily surveying a spatial location that has already been surveyed by another drone in the cluster. In such situations, it is a challenge to keep the databases synchronized, i.e. having the same attributes stored for each spatial location in the different drones. There is often not a need to synchronize the attributes for all of the spatial locations in all of the drones.

Synchronization could be effected in the regular way, by all drones in the cluster communicating with a central server that maintains the "master" version of the database. However, this means that the drones in the cluster cannot co-operate with each other if they do not have contact with the central server.

There is thus a need for a non-hierarchical way of synchronizing spatial entity attributes in different databases that are communicatively coupled to form a distributed and nonhierarchical database cluster.

SUMMARY

The present disclosure aims to provide a method of synchronizing spatial entity attributes in a cluster of databases that are maintained at different locations. This is achieved by methods, databases, computer-readable mediums and computer program products as defined in the claims.

In this disclosure, the term "primary database" defines the database in the database arrangement that initiates the synchronization and defines the segment of the spatial model regarding which the synchronization takes place. The term "secondary database" defines each of the databases in the other database arrangements.

The at least one processor may be one processor, or a number of processors between which signals are transmitted. Some processing may e.g. take place in one processor, and signals may then be transmitted to one or more other processors for further processing.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

BRIEF DESCRIPTION OF THE DRAWINGS

Figs. 1a-c show examples of spatial models.

Fig. 2 shows a schematic view of one or more embodiments of a database arrangement, in accordance with one or more embodiments of the disclosure.

Figs. 3 and 4 show schematic examples of spatial entities that may be represented by data entities, in accordance with one or more embodiments of the disclosure.

Fig. 5 shows a flow diagram for a method for synchronizing databases in a distributed and nonhierarchical database cluster, in accordance with one or more embodiments of the disclosure.

Embodiments of the present invention and their advantages are best understood by referring to the detailed description that follows. It should be appreciated that like reference numerals are used to identify like elements illustrated in one or more of the figures.

## DETAILED DESCRIPTION

Introduction

In order to store attributes that relate to different locations in a space, it is advantageous to divide the space into spatial location coordinates which each have a certain spatial extension, where the spatial extension depends on the resolution required for the storage. In some applications, a resolution of e.g. a square or cubic millimeter is required, while for other applications, a much lower resolution of e.g. a square or cubic meter, or even a square or cubic kilometer, is enough.

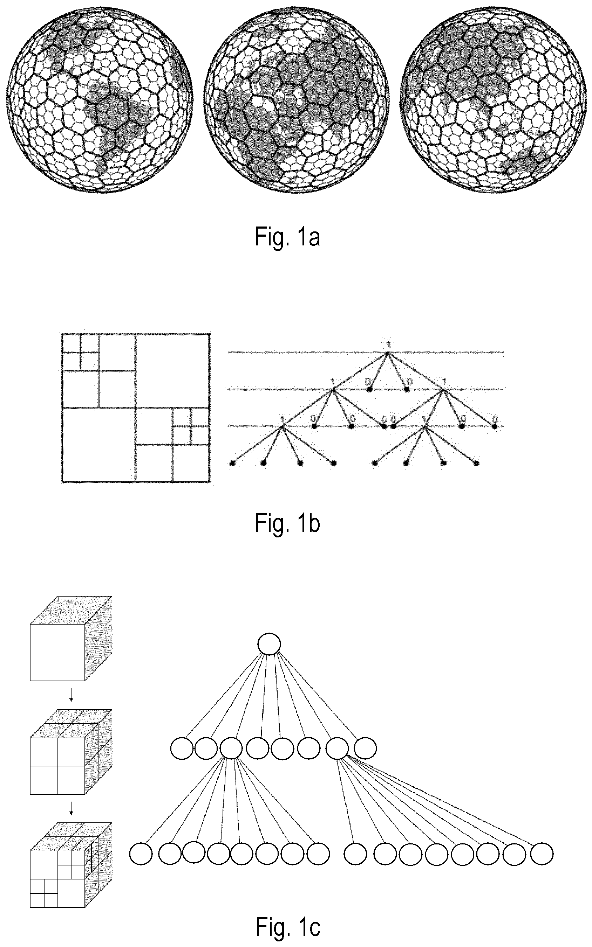

It is possible to model the space using a spatial model, where the smallest part is called a spatial entity. If the space is a two-dimensional (2D) space, the spatial model may e.g. be a hexagon model or a quadtree model. Fig. 1a shows an example of a hexagonal spatial model used for mapping the earth, and Fig. 1b shows an example of a hierarchical quadtree model. If the space is a three-dimensional (3D) space, the spatial model may e.g. be an octree model (octrees are the three-dimensional analog of quadtrees). Fig. 1c shows an example of a hierarchical octree model. Octrees are often used in 3D graphics and 3D game engines. Hexagonal spatial models may also be hierarchical in the same way as the illustrated quadtree and octree models, by a number of connected hexagons being grouped into a larger segment that defines the next hierarchical level. There are also three-dimensional hexagonal spatial models.

If the space is modelled using a spatial model, each spatial location becomes a spatial entity, with well-defined boundaries. Each spatial entity corresponds to a certain area or volume in the spatial model, and can be represented by a data entity in a database. It is then possible to store the attributes of the spatial entity as attributes of this data entity.

The spatial entities may be grouped into segments, where each segment defines an area or volume of the spatial model. The segment may e.g. be defined as a certain number of spatial entities, since each spatial entity corresponds to a certain area or volume in the spatial model. If the spatial model is a hierarchical spatial model, the segment may be defined as a certain hierarchical level in the hierarchical spatial model, since this also corresponds to an area or volume of the spatial model.

If a space to be land surveyed by a cluster of drones is modelled using a spatial model, the attributes of each spatial entity may be stored as attributes of the data entity representing the spatial entity in a database in each drone. The drones in the cluster can then each maintain a database of the attributes of the spatial locations surveyed by this drone as attributes of the data entities representing the spatial entities. However, in order for the drones in the cluster to be able to co-operate with each other at all times, a non-hierarchical way of synchronizing these databases is needed.

The inventor has realized that the general method described in US 2018/0341691 (which describes data synchronization in a distributed data storage system) may be used for determining whether there is a synchronization need for data entities within a selected segment between the databases in the drones. This helps ensuring that the drones in the cluster cover all spatial locations, and avoiding that the same location is surveyed twice.

The solution involves detecting if databases storing attributes of spatial entities of a space modeled using a spatial model, where each database comprises data entities representing spatial entities with defined spatial boundaries within a segment of the spatial model, are synchronized or not for a selected segment. The databases are preferably communicatively coupled to form a distributed and nonhierarchical database cluster.

In order to differentiate the databases from each other, the database in the database arrangement that initiates the synchronization may be defined as a "primary database", and the databases from which snapshots are received may be defined as "secondary databases".

If a snapshot is generated and transmitted simultaneously from different databases in the cluster, a data entity may be changed during the transmission in one database in the cluster without the change being included in the snapshot received in another database in the cluster, e.g. due to communication network transmission delay. In order to ensure that there is a common point in time for comparing the snapshot, it is desirable to eliminate or at least reduce the influence of transmission delay on the step of generating a snapshot.

The present disclosure overcomes this problem by providing each change to a data entity with a time stamp, and determining whether there is a synchronization need based on snapshots where only data entities with a time stamp $\leq T_0$, where $T_s > T_0$, are included, although changes to the data entities up to the time $T_s$ have been received in the databases, and thus discloses a method for detection of a synchronization need and thereby an improved synchronization of data between distributed and nonhierarchical spatial databases in a cluster that is flexible and resilient to faults.

The invention is used for any database arrangements storing attributes of spatial entities of a space modeled using a spatial model, where the database arrangements are communicatively coupled to form a distributed and nonhierarchical database cluster, e.g. database arrangements arranged in a cluster of drones that co-operate to gather land surveying information. It may be difficult to keep the data entities synchronized in the drone databases, i.e. having the same version of data entities in different databases in the cluster. In a non-limiting example, surveying drones may lose wireless network coverage during a period and during this period survey spatial locations that other drones are unaware of. In this example, the data entities in the database of one drone would indicate that the spatial location has been surveyed, whereas the data entities in the databases of other drones in the cluster would indicate that the spatial location has not been surveyed, thus there is a synchronization need. It may be difficult to detect whether databases in the cluster have versions of the data entities that differ, e.g. to determine whether there is a synchronization need.

Another situation where the invention may be used is for vehicles such as e.g. cars that exchange information about the road conditions in the form of spatial entity attributes. It is common nowadays for cars to report road condition data to the cloud, and receive aggregated road condition data from the cloud. However, in situations where there is no connection to the cloud, cars could instead exchange such information directly with other cars. In such situations, there may be a need to determine whether the locally held databases are synchronized for a certain segment of the spatial model. The same may apply to e.g. airplanes or boats, which may exchange information about e.g. weather or navigational warnings in the form of spatial entity attributes. Mobile phones may also have the need to exchange spatial entity attribute information directly between each other.

## System embodiments

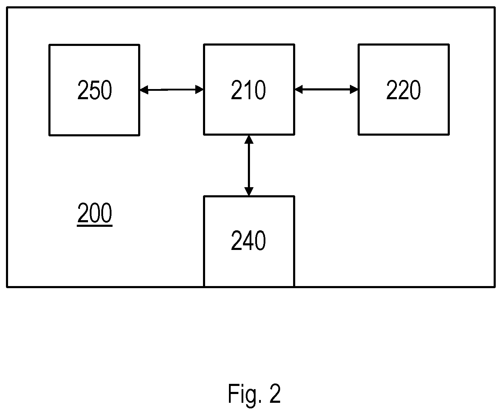

Fig. 2 shows a schematic view of an embodiment of a database arrangement 200. The database arrangement 200 comprises a database 250, at least one processor 210, a storage means 220 in the form of e.g. a memory, and a communications interface 240. The database 250 stores attributes of spatial entities of a space modeled using a spatial model, such as e.g. a hierarchical spatial hexagon model, a hierarchical spatial quadtree model, or a hierarchical spatial octree model. The database 250 comprises data entities representing spatial entities with defined spatial boundaries within at least a segment of the spatial model, where the attributes of each spatial entity is coupled to the respective data entity.

The database arrangement 200 forms a part of a distributed and nonhierarchical cluster of communicatively coupled database arrangements 200. The communications interface 240 is configured to communicate with these other database arrangements 200, in order to send and receive attributes related to the data entities to and from the processor 210 to and from one or more other database arrangements 200 in the cluster.

The at least one processor 210 is provided with specifically designed programming or program code portions adapted to control the at least one processor 210 to perform the steps and functions of one or more embodiments of the methods described herein. The storage means 220 is adapted to store data entities and their attributes received from the at least one processor 210, and the at least one processor 210 may be adapted to retrieve such stored data entities and their attributes from the storage means 220.

The at least one processor 210 is arranged to select a first segment of the spatial model, and generate a snapshot comprising information relating to data entities within said first segment of the spatial model in the database 250 at a snapshot time $T_s$, said information identifying changes to the data entities where each change comprises a time stamp, wherein only data entities with a time stamp $\leq T_0$, where $T_s > T_0$, are included in the snapshot, although changes to the data entities up to the time $T_s$ have been received in the database 250.

The at least one processor 210 is arranged to receive, from one or more other database arrangements 200 in the cluster, corresponding generated snapshots, each snapshot comprising data entities within said first segment of the spatial model in the database of the respective database arrangement 200, wherein only data entities with a time stamp $\leq T_0$, where $T_s > T_0$, are included in the snapshot.

The databases to exchange snapshots with may also be selected, based e.g. on the size of the segment selected and/or the nature of the attributes. The databases from which to receive snapshots may e.g. selected based on the selected first segment of the spatial model. If a very small segment is selected, it may not be interesting to synchronize this segment with all the other databases in the cluster. Also, if the attributes are fast-changing, attributes stored a long time ago in other databases may be less interesting to synchronize. The other databases to exchange snapshots with may however be determined simply based on which other database arrangements are within communicating range. The synchronization may therefore be based on the need for synchronization. In the invention, the snapshot is generated based on there being determined to be a need to synchronize spatial entity attributes in the database 250 with spatial entity attributes in at least one other database, e.g. based on the proximity between two database arrangements 200.

The snapshots comprise all changes to the data entities in the selected segment since the previous snapshot was generated but only up to the time $T_0$. $T_0$ is preferably set in a controlled way, so that it is ensured that all databases have the same reference point, e.g. by determining $T_0$ in such a way that it for the selected snapshot time $T_s$ represents a corresponding time in all databases.

The at least one processor 210 is arranged to determine whether there is a synchronization need based on a comparison between the generated and received snapshots. If the generated snapshot and the received corresponding snapshots all match, there is no need for any synchronization for said selected first segment of the spatial model. If not all of them match, there is a need for synchronization for said selected first segment of the spatial model.

The snapshot time $T_s$ may be at least a delay time $T_d$ after $T_0$, i.e. $T_s \geq T_0 + T_d$. The delay time $T_d$ is preferably set to be longer than the maximum transmission delay time between the database arrangements 200 in the cluster. The maximum transmission delay time may e.g. depend on the bandwidth of the wireless transmission between the database arrangements 200. The transmission delay may e.g. be determined or estimated as end-to-end delay time, round-trip delay time (RTD) or round-trip time (RTT). In embodiments, the transmission delay may be determined or estimated based on a communication network model.

Since the data entities are selected based on their time stamps, only recent changes (up to the time $T_0$) are considered, although changes to the data entities up to the time $T_s$ have been stored in the databases.

By generating a snapshot based on data entities with a time stamp $\leq T_0$, the influence on the generated snapshot of transmission delay time between databases in the cluster may be reduced, thus improving synchronization of distributed databases in a cluster. The delay time $T_d$ may e.g. calculated based on a statistical measure such as max, average, or standard deviation of the transmission delay.

One way of determining $T_0$ so that it for a selected snapshot time $T_s$ represents a corresponding time in all databases is to calculate $T_0$ according to the following equation:

$$T_0 = T_s - (T_s \bmod T_d) - T_d$$

This forces $T_0$ into a time slot of the length $T_d$, and ensures that $T_0$ falls into the same time slot in all databases. It is of course also possible to determine $T_0$ in other ways.

One way of ensuring that only data entities with a time stamp $\leq T_0$ are included in the snapshot is to insert data entities into a buffer, and select data entities from the buffer based on the time stamps of the data entities. It is possible to reduce the complexity of the selection of data entities from the buffer by introducing an ordered buffer such that all the selected data entities are in adjacent positions in the buffer. The data entities may e.g. be ordered based on the time stamp of the data entity in ascending or descending order.

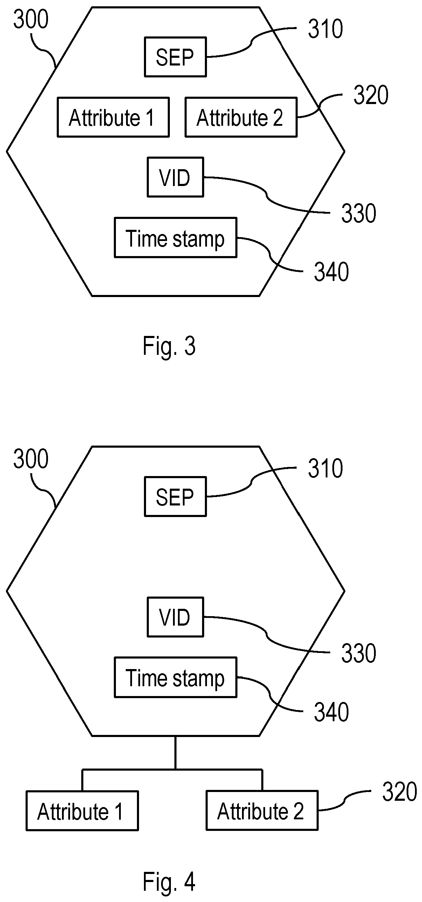

Figs. 3 and 4 show schematic examples of spatial entities 300 that may be represented by data entities. A spatial entity 300 can be seen as an atomic entity, or be divided into attribute sets that are atomic entities belonging to the commonly defined spatial entity.

Since each spatial entity 300 has a defined area or volume with defined spatial boundaries, each data entity may comprise a spatial entity position (SEP) 310. The SEP 310 preferably defines the position of the spatial entity within the spatial model, and may be of any data type, e.g. text, integer or floating point number, as would be understood by a skilled person. The SEP 310 may e.g. be the coordinates or address that defines the location of the spatial entity within the spatial model. If the spatial model e.g. is an octree model of the earth with the center of the earth defined as the center of the octree model, the address to the spatial entity within the spatial model may also define the physical position of the spatial entity. However, in other situations, the SEP 310 may be just a data address within the model, and the actual physical position of the spatial entity may be defined elsewhere.

At least one attribute 320 of the spatial entity may also be coupled to each data entity, e.g. by being comprised in the data entity. In embodiments, the at least one attribute 320 may be of any data type, e.g. text, integer or floating point number, as would be understood by a skilled person. The attribute 320 is often more than just a single value. It can be any collection of numbers and/or strings and it can include internal objects, even in several levels. The attribute 320 is thus often a complex data structure. Examples of spatial entity attributes are e.g. elevation, inclination, temperature, humidity, classification of vegetation, detection of different kinds of attacks on vegetation such as e.g. mold or insects, and detection of algae bloom. Spatial entity attributes may also be e.g. different kinds of buildings or edifices.

The data entity preferably comprises a time stamp 340 for each change to an attribute 320 of the data entity. The time stamps 340 do not necessarily represent the actual time - any parameter that indicates the relative time can serve as a time stamp 340. A time stamp 340 may e.g. be in the form h:m:s, such as e.g. 8:28:27.32 or 11:57:22.81, but it may also be e.g. a number representing e.g. the number of milliseconds that have passed since a defined starting point. The databases are preferably synchronized so that time stamps 340 generated at the same time in different databases correspond to each other, using methods per se known to the person skilled in the art.

In embodiments, the data entity may further comprise a version identity (VID) 330 and/or a deleted-flag that indicates that the data entity is created and exists or that the data entity has been deleted but not erased from the memory. The optional VID 330 may e.g. be generated by calculating a hash sum or generating a value of some other kind, as would be understood by the skilled person. There are also a number of other ways of marking a data entity as deleted, e.g. by letting a specific data entity type represent a deleted data entity, and allow this data entity type to exclude its contents, thus making it smaller.

In embodiments, the optional VID 330 is initially set when the data entity is created, and updated each time an attribute 320 is updated. In embodiments, the optional VID 330 uniquely identifies the version of the attribute 320 and is a unique identifier that may be generated by calculating a hash sum or by generating a value of some kind. In a non-limiting example, the optional VID 330 may be represented by 16 bits, 32 bits, 64 bits, 128 bits or any other number of bits or data representation depending on the application, number of databases etc. In yet an example, the optional VID 330 may be randomly generated. In embodiments, the data entity time stamp 340 is set to the time recorded by the database when the data entity is created, updated or deleted. In embodiments, the optional entity deleted-flag is set to FALSE or 0 (zero) when the data entity is created and exists or to TRUE or 1 (one) when the data entity has been deleted but not erased from the memory 220.

The time stamp 340 may indicate when the data entity was created, updated or deleted. The time stamp 340 may e.g. be set or assigned to the data entity when the change to the data entity is made. In embodiments, each time a data entity is created, or deleted, or updated by changing the content, which leads to VID 330 and/or time stamp 340 changes, a changed data entity is generated and distributed to the other databases in the cluster via the communications network.

The example spatial entity 300 shown in Fig. 3 is an atomic entity represented by a data entity comprising a SEP 310, two attributes 320, a VID 330 and a time stamp 340.

The example spatial entity 300 shown in Fig. 4 is coupled to two attributes 320 that are atomic entities belonging to the commonly defined spatial entity 300. In this case, the time stamp 340 and the optional VID 330 may be comprised either in the data entity (as shown in Fig. 4) or as a time stamp 340 and an optional VID 330 in each of the attributes 320.

In embodiments, the first segment of the spatial model is selected based on the SEP 310 of the data entity having the most recent time stamp 340 in the primary database. In the example where the method is used for synchronizing e.g. two drones working side-by-side surveying adjacent spatial locations, the most important segment to synchronize may be the segment of the spatial model currently being surveyed by both drones, i.e. the most recently surveyed spatial entity 300. This spatial entity would normally be represented by the data entity having the most recent time stamp in the primary database, since attributes are normally stored or updated for the data entities when the spatial entities are surveyed. If the segment of the spatial model is selected to include the data entity having the most recent time stamp, the segment will thus include the data entity representing the most recently surveyed spatial entity.

In embodiments, a data entity is not created until an attribute 320 has been determined for the spatial entity 300 represented by this data entity. This means that there will be no data entities without attributes 320 in the databases, which means that at start there are no data entities at all in the databases. This may be useful especially if there are large numbers of spatial entities, e.g. due to the resolution being high or the area or volume of the spatial model being large.

The determination of the synchronization need is preferably performed according to a predictable method or algorithm based on generated and received snapshots such that a synchronization need determined will be the same in all databases in the cluster if the determination is based on identical sets of snapshots. In embodiments, the synchronization need is determined by calculating a checksum based on data entities of the snapshots, where the checksum is generated by merging generated and received data entities, e.g. by applying XOR to a common attribute of the data entities. The synchronization need may be determined in other ways, such as calculating a hash-sum or using an algorithm which calculates a smaller portion of data representing a unique identity of the data entities.

The data entities in each database in the cluster may e.g. be synchronized according to the rules:

Rule 1. A data entity is always changed as a whole.

Rule 2. Newer versions of data entities replace older.

Rule 3. A predicable selection behavior is needed when data entities and/or snapshots have the same time stamp, e.g. the data entity and/or the snapshot with the highest or lowest VID 330 is selected.

Rule 4. Deleted data entities and/or snapshots always replace none-deleted, even if they are older.

Rule 5. Newer versions of deleted data entities and/or snapshots replace older deleted versions.

In embodiments, all databases in the cluster maintain data using exactly the same rules. Rule 3 may be particularly important if the representation of recorded time is of finite resolution. Rule number 4 may be particularly important to avoid having data entities reappearing after being deleted. Rule number 5 may be particularly important when a timeslot configuration comprising multiple non-overlapping timeslots is used, as deleted entities may otherwise end up in different timeslots. This could cause a situation where the databases falsely seems to be out of sync. Rules 4 and 5 are optional and used only if deleted data entities are handled.

In an exemplary embodiment, the snapshot is generated by merging the set of snapshots and/or data entities into a data structure. The SEPs 310 and/or the attributes 320 and/or the VIDs 330 and/or the time stamps 340 of the data entities may be merged to generate the snapshot. In embodiments, merging data entities to generate a snapshot further comprises applying a logical operator to the data entities, such as exclusive or (XOR), to generate a snapshot in the form of a checksum, e.g. to apply XOR to the VID of the data entities. Other ways of merging the data, such as calculating a hash-sum, may also be used.

The synchronization need is determined by determining that there is no synchronization need if the generated snapshot matches the received snapshots, or by determining that there is a synchronization need if the generated snapshot and the received corresponding snapshots do not all match. One exemplary embodiment of a determination that there is no synchronization need is if the data entities on which the generated snapshot is based, and the corresponding data entities stored in the other databases in the cluster, all match, e.g. have identical SEP 310, attributes 320 and time stamp 340, and optionally the same VID 330.

One example of a determined need for synchronization is if the data entities on which the generated snapshot is based and the corresponding data entities stored at the other databases in the cluster do not all match, and e.g. any of the SEP 310, attributes 320 and time stamp 340 differ amongst data entities in each database in the cluster. Yet an example of a determined need for synchronization is if the data entities on which the generated snapshot is based and the corresponding data entities stored at the other databases in the cluster do not all match, and e.g. any of the SEP 310, attributes 320 and VID 330 differ amongst data entities in each database in the cluster.

In yet an embodiment, the generated snapshots comprise information descriptive of the data entities. In yet an embodiment, the generated snapshots comprise a checksum based on the data entities. In yet an embodiment, the generated snapshots comprise a checksum based on the snapshots. In yet an embodiment, the checksum is based on changes to the data entities. In yet an embodiment, the generated snapshots comprise a checksum based on information comprised in the data entities.

In embodiments, the synchronization need is determined by calculating a checksum based on the data entities in the snapshot, where the checksum is generated by merging generated and received information. The synchronization need may however also be determined in other ways, such as calculating a hash-sum or using an algorithm which calculates a smaller portion of data representing a unique identity of the data entities.

Method embodiments

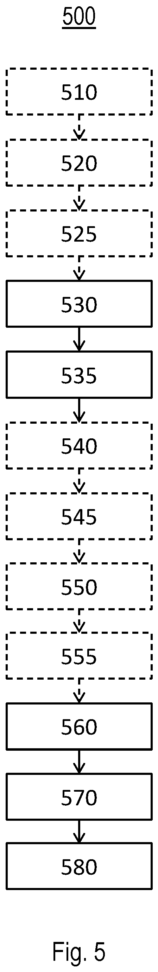

Fig. 5 shows a flow diagram for a method 500 for synchronizing databases in a distributed and nonhierarchical database cluster. The method is used for synchronization between a primary database and one or more secondary databases communicatively coupled with the primary database to form a distributed and non-hierarchical database cluster, wherein the primary and secondary databases each store attributes of spatial entities of a space modeled using a spatial model, and each database comprises at least one data entity representing a spatial entity with defined spatial boundaries within a segment of the spatial model, where the attributes of each spatial entity is coupled to the respective data entity.

The method comprises the following steps:

Step 530: selecting a first segment of the spatial model.

Step 535: generating a snapshot comprising information relating to data entities within said first segment of the spatial model in the primary database at a snapshot time $T_s$, said information identifying changes to the data entities where each change comprises a time stamp 340, wherein only data entities with a time stamp $\leq T_0$, where $T_s > T_0$, are included in the snapshot, although changes to the data entities up to the time $T_s$ have been received in the primary database.

Step 560: receiving, from one or more secondary databases in the cluster, corresponding generated snapshots, each snapshot comprising data entities within said first segment of the spatial model in the secondary database, wherein only data entities with a time stamp $\leq T_0$, where $T_s > T_0$, are included in the snapshot.

Step 570: determining whether there is a synchronization need based on a comparison between the generated and received snapshots, wherein there is determined to be a synchronization need for said selected first segment of the spatial model if the generated snapshot and the received corresponding snapshots do not all match.

Step 580: synchronizing the data entities within said selected first segment in the primary database with the data entities within said selected first segment in the at least one secondary database if there is determined to be a synchronization need.

In embodiments, the data entities are not created until at least one attribute 320 has been determined for the spatial entity 300 represented by the respective data entity. This means that there will be no data entities without attributes 320 in the databases, which means that at start there are no data entities at all in the databases. This may be useful especially if there are large numbers of spatial entities, e.g. due to the resolution being high or the area or volume of the spatial model being large.

In embodiments, the space has been modeled using a hierarchical spatial model, such as e.g. a hierarchical hexagonal model, a hierarchical quadtree model or a hierarchical octree model.

In embodiments, the determining 570 of the synchronization need is done by calculating a checksum based on the data entities in the snapshot, where the checksum is generated by merging generated and received information. The synchronization need may however also be determined in other ways, such as e.g. by calculating a hash-sum or using an algorithm which calculates a smaller portion of data representing a unique identity of the data entities.

In embodiments, the data entities are synchronized in such a way that newer versions of the data entity always replace older. The data entities may further be synchronized in such a way that a deleted data entity always replaces a none-deleted, even if it is older.

In embodiments, the method further comprises one or more of the following steps:

Step 510: determining $T_0$ in such a way that it for the selected snapshot time $T_s$ represents a corresponding time in all databases.

Step 520: selecting the snapshot time $T_s$ to be at least a delay time $T_d$ after $T_0$, i.e. $T_s \geq T_0 + T_d$.

Step 525: setting the delay time $T_d$ to be longer than the maximum transmission delay time between the databases in the cluster.

Step 530: selecting said first segment of the spatial model based on the SEP 310 of the data entity having the most recent time stamp 340 in the primary database. The size of the segment may be selected e.g. based on the transmission conditions, in order to reduce the amount of data needed to be transferred if the transmission conditions are bad. The segment may be selected to be the whole spatial model, but it is generally more practical to select a limited area or volume.

Step 540: generating the snapshot based on there being determined to be a need to synchronize spatial entity attributes in the primary database with spatial entity attributes in at least one secondary database. This may e.g. be based on the proximity between two database arrangements 200.

Step 545: selecting a secondary database from which to receive a snapshot based on the spatial entity position (SEP) 310 of the data entity having the most recent time stamp 340 in said secondary database. The number of other databases to exchange snapshots with may be selected based e.g. on the nature of the attributes 320. If the attributes 320 are fast-changing, attributes 320 stored a long time ago in other databases may be less interesting to synchronize. The other databases to exchange snapshots with may however be determined simply based on which other databases are within communicating range.

Step 550: selecting a secondary database from which to receive a snapshot based on whether there is a data entity within said selected first segment in said secondary database. A database comprising no such data entity does not have any information of interest for the primary database, and there is thus no need for synchronization from the point of view of the primary database.

Step 555: selecting a secondary database from which to receive a snapshot based on whether there is at least one data entity within said selected first segment in said secondary database, and whether the time stamp of the most recent changes to said data entity is within a predetermined threshold time span. This is a way of ensuring that only information that is not too old is synchronized. The threshold time span may depend on the attributes, since some attributes may be more fast-changing than others.

## Other embodiments

The at least one processor 210 of the described database arrangement 200 is in accordance with one or more embodiments configured to perform a selection of any or all of the method steps described herein that are associated with synchronizing databases.

In one or more embodiments, there is provided a computer-readable medium on which is stored:

- non-transitory information for performing a method according to any of the embodiments described herein;
  and/or
- non-transitory information configured to control a processor to perform any of the steps or functions of embodiments described herein.

In one or more embodiments, there is provided a computer program product comprising code portions adapted to control a processor to perform any of the steps or functions of any of the embodiments described herein. Software in accordance with the present disclosure, such as program code portions and/or data, can be stored in non-transitory form on one or more machine-readable mediums. It is also contemplated that software identified herein can be implemented using one or more general purpose or specific purpose computers and/or computer systems, networked and/or otherwise.

Where applicable, one or more embodiments provided by the present disclosure can be implemented using hardware, software, or combinations of hardware and software, Also where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice-versa.

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure. Accordingly, the scope of the invention is defined only by the claims.

**Claims**

1. A method (500) for synchronizing data entities in a primary database (250) and one or more secondary databases communicatively coupled with the primary database (250) to form a distributed and non-hierarchical database cluster, wherein the primary and secondary databases each store attributes (320) of spatial entities (300) of a space modeled using a spatial model, and each database comprises at least one data entity representing a spatial entity (300) with defined spatial boundaries within a segment of the spatial model, where the attributes (320) of each spatial entity (300) is coupled to the respective data entity, the method comprising:

   selecting (530) a first segment of the spatial model;
   generating (535) a snapshot comprising information relating to data entities within said first segment of the spatial model in the primary database at a snapshot time $T_s$, said information identifying changes to the data entities where each change comprises a time stamp (340), wherein only data entities with a time stamp $\leq T_0$, where $T_s > T_0$, are included in the snapshot, although changes to the data entities up to the time $T_s$ have been received in the primary database (250);
   selecting (545) at least one secondary database in the cluster from which to receive a snapshot based on the spatial entity position (SEP) (310) of the data entity having the most recent time stamp (340) in said secondary database, by determining if said data entity is within the selected first segment, wherein the first segment has been selected based on the spatial entity position (SEP) (310) of the data entity having the most recent time stamp (340) in the primary database, in such a way that the first segment includes the data entity having the most recent time stamp (340) in the primary database;
   receiving (560), from said at least one selected secondary database, corresponding generated snapshots, each snapshot comprising data entities within said first segment of the spatial model in said secondary database, wherein only data entities with a time stamp $\leq T_0$, where $T_s > T_0$, are included in the snapshot;

   determining (570) whether there is a synchronization need based on a comparison between the generated and received snapshots, wherein there is determined to be a synchronization need for said selected first segment of the spatial model if the generated snapshot and the received corresponding snapshots do not all match; and
   synchronizing (580) the data entities within said selected first segment in the primary database with the data entities within said selected first segment in the at least one secondary database if there is determined to be a synchronization need.

2. The method of claim 1, further comprising selecting (520) the snapshot time $T_s$ to be at least a delay time $T_d$ after $T_0$, i.e. $T_s \geq T_0 + T_d$.

3. The method of claim 2, further comprising setting (525) the delay time $T_d$ to be longer than the maximum transmission delay time between the databases in the cluster.

4. The method of any one of claims 1 - 3, further comprising determining (510) $T_0$ in such a way that it for the selected snapshot time $T_s$ represents a corresponding time in all databases.

5. The method of any one of claims 1 - 4, further comprising generating (540) the snapshot based on there being determined to be a need to synchronize spatial entity attributes in the primary database with spatial entity attributes in at least one secondary database.

6. The method of any one of claims 1 - 5, wherein a data entity is not created in a database until an attribute (320) has been determined for the spatial entity (300) represented by this data entity.

7. The method of claim 6, further comprising selecting (555) a secondary database from which to receive a snapshot based on whether there is at least one data entity within said selected first segment in said secondary database, and whether the time stamp of the most recent changes to said data entity is within a predetermined threshold time span.

8. The method of any one of claims 1 - 7, wherein the space has been modeled using a hierarchical spatial model, such as e.g. a hierarchical hexagonal model, a hierarchical quadtree model or a hierarchical octree model.

9. The method of any one of claims 1 - 8, wherein the determining (570) of the synchronization need is done by calculating a checksum based on the data entities in the snapshot, where the checksum is generated by merging generated and received information.

10. A primary database arrangement (200) in a distributed and nonhierarchical cluster of communicatively coupled with one or more secondary database arrangements, the primary database arrangement (200) comprising a primary database (250) storing attributes of spatial entities of a space modeled using a spatial model, and comprising data entities, each data entity representing a spatial entity (300) with defined spatial boundaries within a segment of the spatial model, where the attributes (320) of each spatial entity (300) is coupled to the respective data entity, wherein the primary database arrangement (200) further comprises:

> at least one processor (210) configured to perform the method steps of any of claims 1 - 9;
> a storage means (220) configured to store the data entities and their attributes (320); and
> a communications interface (240) configured to send/receive attributes (320) related to the data entities to/from the processor to/from one or more secondary database arrangements in the cluster.

11. A computer-readable medium on which is stored non-transitory information configured to control a processor to perform the method steps of any of claims 1 - 9.

12. A computer program product comprising code portions adapted to control a processor to perform the method steps of any of claims 1 - 9.

**Patentansprüche**

1. Verfahren (500) zum Synchronisieren von Datenentitäten in einer primären Datenbank (250) und einer oder mehreren sekundären Datenbanken, die kommunikativ mit der primären Datenbank (250) gekoppelt sind, von einem verteilten und nicht hierarchischen Datenbankcluster, wobei die primären und sekundären Datenbanken jeweils Attribute (320) von räumlichen Entitäten (300) eines unter Verwendung eines räumlichen Modell modellierten Raums speichern und jede Datenbank mindestens eine Datenentität umfasst, die eine räumliche Entität (300) mit definierten räumlichen Grenzen innerhalb eines Segments des räumlichen Modells darstellt, wobei die Attribute (320) von jeder räumlichen Entität (300) mit der jeweiligen Datenentität gekoppelt sind, wobei das Verfahren Folgendes umfasst:

> Auswählen (530) eines ersten Segments des räumlichen Modells;
Erzeugen (535) einer Momentaufnahme, die Informationen umfasst, die sich auf Datenentitäten innerhalb des ersten Segments des räumlichen Modells in der primären Datenbank zu einem Zeitpunkt $T_s$ der Momentaufnahme beziehen, wobei die Informationen Änderungen an den Datenentitäten identifizieren, wobei jede Änderung einen Zeitstempel (340) umfasst, wobei nur Datenentitäten mit einem Zeitstempel $\leq T_0$, wobei $T_s > T_0$ ist, in der Momentaufnahme enthalten sind, obwohl Änderungen an den Datenentitäten bis zu dem Zeitpunkt $T_s$ in der primären Datenbank (250) empfangen wurden;
Auswählen (545) von mindestens einer sekundären Datenbank in dem Cluster, von der eine Momentaufnahme empfangen werden soll, basierend auf der Position der räumlichen Entität (SEP) (310) der Datenentität, die den jüngsten Zeitstempel (340) in der sekundären Datenbank aufweist, durch Bestimmen, ob die Datenentität innerhalb des ausgewählten ersten Segments liegt, wobei das erste Segment basierend auf der Position der räumlichen Entität (SEP) (310) der Datenentität ausgewählt wurde, die den jüngsten Zeitstempel (340) in der primären Datenbank aufweist, auf solche Weise, dass das erste in der Datenentität eingeschlossene Segment den jüngsten Zeitstempel (340) in der primären Datenbank aufweist;
Empfangen (560) von der mindestens einen ausgewählten sekundären Datenbank von entsprechenden erzeugten Momentaufnahmen, wobei jede Momentaufnahme Datenentitäten innerhalb des ersten Segments des räumlichen Modells in der sekundären Datenbank umfasst, wobei nur Datenentitäten mit einem Zeitstempel $\leq T_0$, wobei $T_s > T_0$ ist, in der Momentaufnahme enthalten sind;
Bestimmen (570), ob ein Synchronisierungsbedarf besteht, basierend auf einem Vergleich zwischen den erzeugten und empfangenen Momentaufnahmen, wobei bestimmt wird, dass ein Synchronisierungsbedarf für das ausgewählte ersten Segment des räumlichen Modells besteht, wenn die erzeugte Momentaufnahme und die empfangenen entsprechenden Momentaufnahmen nicht alle übereinstimmen; und
Synchronisieren (580) der Datenentitäten innerhalb des ausgewählten ersten Segments in der primären Datenbank mit den Datenentitäten innerhalb des ausgewählten ersten Segments in der mindestens einen sekundären Datenbank, wenn bestimmt ist, dass ein Synchronisierungsbedarf besteht.

2. Verfahren nach Anspruch 1, weiter umfassend Auswählen (520), dass der Zeitpunkt $T_s$ der Moment-

aufnahme mindestens eine Verzögerungszeit $T_d$ nach $T_0$ sein soll, d. h. $T_s \geq T_0 + T_d$.

3. Verfahren nach Anspruch 2, weiter umfassend Festlegen (525), dass die Verzögerungszeit $T_d$ länger als die maximale Verzögerungszeit für die Übertragung zwischen den Datenbanken in im Cluster sein soll.

4. Verfahren nach einem der Ansprüche 1-3, weiter umfassend Bestimmen (510) von $T_0$ auf solche Weise, dass er für den ausgewählten Zeitpunkt $T_s$ der Momentaufnahme einen entsprechenden Zeitpunkt in allen Datenbanken darstellt.

5. Verfahren nach einem der Ansprüche 1-4, weiter umfassend Erzeugen (540) der Momentaufnahme basierend darauf, dass bestimmt wurde, dass ein Synchronisierungsbedarf der räumlichen Entitätsattributen in der primären Datenbank mit räumlichen Entitätsattributen in mindestens einer sekundären Datenbank besteht.

6. Verfahren nach einem der Ansprüche 1-5, wobei eine Datenentität in einer Datenbank solange nicht erzeugt wird, bis ein Attribut (320) für die durch diese Datenentität dargestellte räumliche Entität (300) bestimmt wurde.

7. Verfahren nach Anspruch 6, weiter umfassend Auswählen (555) einer sekundären Datenbank, von der eine Momentaufnahme empfangen werden soll, basierend darauf, ob mindestens eine Datenentität innerhalb des ausgewählten ersten Segments in der sekundären Datenbank vorhanden ist, und ob der Zeitstempel der jüngsten Änderungen an der Datenentität innerhalb eines vorbestimmten Zeitschwellenwerts liegt.

8. Verfahren nach einem der Ansprüche 1-7, wobei der Raum unter Verwendung eines hierarchischen räumlichen Modells, wie zum Beispiel eines hierarchischen hexagonalen Modells, eines hierarchischen Quadrantenbaum-Modells oder eines hierarchischen Oktantenbaum-Modells modelliert wurde.

9. Verfahren nach einem der Ansprüche 1-8, wobei das Bestimmen (570) des Synchronisierungsbedarfs durch Berechnen einer Prüfsumme basierend auf den Datenentitäten in der Momentaufnahme vorgenommen wird, wobei die Prüfsumme durch Zusammenführen von erzeugten und empfangenen Informationen erzeugt wird.

10. Primäre Datenbankanordnung (200) in einem verteilten und nicht hierarchischen Cluster von kommunikativ mit einer oder mehreren sekundären Datenbankanordnungen gekoppelten Datenbanken, wobei die primäre Datenbankanordnung (200) eine primäre Datenbank (250) umfasst, die Attribute von räumlichen Entitäten eines unter Verwendung eines räumlichen Modells modellierten Raums speichert und Datenentitäten umfasst, wobei jede Datenentität eine räumliche Entität (300) mit definierten räumlichen Grenzen innerhalb eines Segments des räumlichen Modells darstellt, wobei die Attribute (320) von jeder räumlichen Entität (300) mit der jeweiligen Datenentität gekoppelt sind, wobei die primäre Datenbankanordnung (200) weiter Folgendes umfasst:

mindestens einen Prozessor (210), der so konfiguriert ist, dass er die Verfahrensschritte nach einem der Ansprüche 1-9 durchführt; ein Speichermittel (220), das so konfiguriert ist, dass es die Datenentitäten und deren Attribute (320) speichert; und eine Kommunikationsschnittstelle (240), die so konfiguriert ist, dass sie Attribute (320) in Bezug auf die Datenentitäten an den Prozessor an eine oder mehrere sekundäre Datenbankanordnungen im Cluster sendet/davon empfängt.

11. Computerlesbares Medium, auf dem nichtflüchtige Informationen gespeichert sind, die so konfiguriert sind, dass sie einen Prozessor so steuern, dass er die Verfahrensschritte nach einem der Ansprüche 1-9 durchführt.

12. Computerprogrammprodukt, das Codeabschnitte umfasst, die so angepasst sind, dass sie einen Prozessor so steuern, dass er die Verfahrensschritte nach einem der Ansprüche 1-9 durchführt.

**Revendications**

1. Procédé (500) destiné à synchroniser des entités de données dans une base de données principale (250) et une ou plusieurs bases de données secondaires reliées de manière communicante à la base de données principale (250) pour former une grappe de bases de données distribuées et non hiérarchiques, dans lequel les bases de données principale et secondaire stockent chacune des attributs (320) d'entités spatiales (300) d'un espace modélisé en utilisant un modèle spatial, et chaque base de données comprend au moins une entité de données représentant une entité spatiale (300) avec des limites spatiales définies au sein d'un segment du modèle spatial, où les attributs (320) de chaque entité spatiale (300) sont reliés à l'entité de données respective, le procédé comprenant :

la sélection (530) d'un premier segment du modèle spatial ; la génération (535) d'un instantané comprenant des informations concernant des entités de données au sein dudit premier segment du modèle spatial dans la base de données principale à un instant d'instantané $T_s$, lesdites informations identifiant des changements dans les entités de données où chaque changement comprend une estampille temporelle (340), dans lequel seules des entités de données avec une estampille temporelle $\leq T_0$, avec $T_s > T_0$, sont incluses dans l'instantané, bien que des changements dans les entités de données jusqu'à l'instant $T_s$ aient été reçues dans la base de données principale (250) ;

la sélection (545) d'au moins une base de données secondaire dans la grappe à partir de laquelle recevoir un instantané sur la base de la position d'entité spatiale (SEP) (310) de l'entité de données présentant l'estampille temporelle (340) la plus récente dans ladite base de données secondaire, en déterminant si ladite entité de données est au sein du premier segment sélectionné, dans lequel le premier segment a été sélectionné sur la base de la position d'entité spatiale (SEP) (310) de l'entité de données présentant l'estampille temporelle (340) la plus récente dans la base de données principale, de telle sorte que le premier segment inclut l'entité de données présentant l'estampille temporelle (340) la plus récente dans la base de données principale ;

la réception (560), à partir de ladite au moins une base de données secondaire sélectionnée, d'instantanés générés correspondants, chaque instantané comprenant des entités de données au sein dudit premier segment du modèle spatial dans ladite base de données secondaire, dans lequel seules des entités de données avec une estampille temporelle $\leq T_0$, avec $T_s > T_0$, sont incluses dans l'instantané ;

le fait (570) de déterminer s'il y a un besoin de synchronisation sur la base d'une comparaison entre les instantanés générés et reçus ; dans lequel il est déterminé qu'il y a un besoin de synchronisation pour ledit premier segment sélectionné du modèle spatial si l'instantané généré et les instantanés correspondants reçus ne correspondent pas tous ; et

la synchronisation (580) des entités de données au sein dudit premier segment sélectionné dans la base de données principale avec les entités de données au sein du premier segment sélectionné dans l'au moins une base de données secondaire s'il est déterminé qu'il y a un besoin de synchronisation.

2. Procédé selon la revendication 1, comprenant en outre la sélection (520) de l'instant d'instantané $T_s$ pour qu'il soit un temps de retard $T_d$ après $T_0$, à

savoir $T_s \geq T_0 + T_d$.

3. Procédé selon la revendication 2, comprenant en outre le réglage (525) du temps de retard $T_d$ pour qu'il soit plus long que le temps de retard de transmission maximum entre les bases de données dans la grappe.

4. Procédé selon l'une quelconque des revendications 1 à 3, comprenant en outre la détermination (510) de $T_0$ de telle sorte qu'il représente pour l'instant d'instantané $T_s$ sélectionné un temps correspondant dans toutes les bases de données.

5. Procédé selon l'une quelconque des revendications 1 à 4, comprenant en outre la génération (540) de l'instantané sur la base du fait qu'il est déterminé qu'il y a un besoin de synchroniser des attributs d'entités spatiales dans la base de données principale avec des attributs d'entités spatiales dans au moins une base de données secondaire.

6. Procédé selon l'une quelconque des revendications 1 à 5, dans lequel une entité de données n'est pas créée dans une base de données tant qu'un attribut (320) n'a pas été déterminé pour l'entité spatiale (300) représentée par cette entité de données.

7. Procédé selon la revendication 6, comprenant en outre la sélection (555) d'une base de données secondaire à partir de laquelle recevoir un instantané sur la base du fait qu'il y a au moins une entité de données au sein dudit premier fragment sélectionné dans ladite base de données secondaire et du fait que l'estampille temporelle des changements les plus récents dans ladite entité de données est au sein d'un intervalle de temps de seuil prédéterminé.

8. Procédé selon l'une quelconque des revendications 1 à 7, dans lequel l'espace a été modélisé en utilisant un modèle spatial hiérarchique, tel que par ex. un modèle hexagonal hiérarchique, un modèle d'arbre quaternaire hiérarchique ou un modèle d'arbre octaire hiérarchique.

9. Procédé selon l'une quelconque des revendications 1 à 8, dans lequel la détermination (570) du besoin de synchronisation est effectuée en calculant une somme de contrôle sur la base des entités de données dans l'instantané, où la somme de contrôle est générée en fusionnant des informations générées et reçues.

10. Agencement de base de données principale (200) dans une grappe distribuée et non hiérarchique d'agencements de bases de données couplés de manière communicante avec un ou plusieurs agencements de bases de données secondaires, l'agencement de base de données principale (200) comprenant une base de données principale (250) stockant des attributs d'entités spatiales d'un espace modélisé en utilisant un modèle spatial, et comprenant des entités de données, chaque entité de données représentant une entité spatiale (300) avec des limites spatiales définies au sein d'un segment du modèle spatial, où les attributs (320) de chaque entité spatiale (300) sont reliés à l'entité de données respective, dans lequel l'agencement de base de données principale (200) comprend en outre :

au moins un processeur (210) configuré pour mettre en œuvre les étapes de procédé selon l'une quelconque des revendications 1 à 9 ;
un moyen de stockage (220) configuré pour stocker les entités de données et leurs attributs (320) ; et
une interface de communication (240) configurée pour envoyer/recevoir des attributs (320) associés aux entités de données vers/depuis le processeur vers/depuis un ou plusieurs agencements de bases de données secondaires dans la grappe.

11. Support lisible sur ordinateur sur lequel sont stockées des informations non transitoires configurées pour commander un processeur afin de mettre en œuvre les étapes de procédé selon l'une quelconque des revendications 1 à 9.

12. Produit de programme informatique comprenant des portions de code adaptées pour commander un processeur afin qu'il mette en œuvre les étapes de procédé selon l'une quelconque des revendications 1 à 9.

Fig. 1a

Fig. 1b

Fig. 1c

Fig. 2

Fig. 3

Fig. 4

<u>500</u>

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7912633 B1
- US 22032011 B1
- US 2018341691 A1
- US 29112018 A1
- US 20180341691 A